# EUROPEAN PATENT APPLICATION

(11) **EP 4 317 106 A1**
(43) Date of publication of application: **07.02.2024**
(21) Application number: 22780750.0
(22) Date of filing: 28.03.2022
(51) Int. Cl.: C04B 35/587, C04B 35/645, F16C 19/06, F16C 33/32, G01N 21/65

(54) **SILICON NITRIDE SINTERED BODY, WEAR-RESISTANT MEMBER, AND METHOD FOR PRODUCING SILICON NITRIDE SINTERED BODY**

(30) Priority: 30.03.2021 JP 2021057053
(71) Applicant: KABUSHIKI KAISHA TOSHIBA, Minato-ku Tokyo 105-0023 (JP); Toshiba Materials Co., Ltd., Isogo-Ku Yokohama-Shi Kanagawa 235-0032 (JP)
(72) Inventor: SANO, Shoya, Yokohama-shi, Kanagawa 235-0032 (JP); AOKI, Katsuyuki, Yokohama-shi, Kanagawa 235-0032 (JP); FUNAKI, Kai, Yokohama-shi, Kanagawa 235-0032 (JP); OOKUBO, Kazuya, Yokohama-shi, Kanagawa 235-0032 (JP)
(74) Representative: Henkel & Partner mbB
(86) International application number: PCT/JP2022/015017
(87) International publication number: WO 2022/210539

(57) **Abstract**

Abstract: This silicon nitride sintered body according to an embodiment is characterized by: including silicon nitride crystal particles and a grain boundary phase; and showing seven or more peaks detected in the range from 400 cm⁻¹ to 1200 cm⁻¹ when a 20 µm × 20 µm region in an arbitrary cross section of the silicon nitride sintered body is analyzed using Raman spectroscopy, where the strongest peak of the seven of more peaks is not found in the range from 515 cm⁻¹ to 525 cm⁻¹.Also, at least three of the seven or more peaks are preferably in the range

## Description

### [Technical Field]

Embodiments described below generally relate to a silicon nitride sintered body, a wear-resistant member, and a method for producing a silicon nitride sintered body.

### [Background Art]

Silicon nitride sintered bodies are used as wear-resistant members such as bearing balls, rollers, and the like by taking advantage of the wear resistance of silicon nitride sintered bodies. Silicon nitride-yttrium oxide-aluminum oxide-aluminum nitride-titanium oxide sintering compositions and the like are known as sintering compositions of conventional silicon nitride sintered bodies (Patent Literature 1: JP-A 2001-328869 (Kokai)). The use of yttrium oxide, aluminum oxide, aluminum nitride, and titanium oxide as sintering aids improves the sinterability and produces silicon nitride sintered bodies having excellent wear resistance.

For example, a bearing has a structure in which bearing balls are disposed between an outer ring and an inner ring. Bearing life is affected by the lives of the bearing balls, outer ring, and inner ring. In Patent Literature 1, the durability of a bearing ball made of a silicon nitride sintered body is improved. On the other hand, bearing steel (SUJ2) is used as the outer ring and inner ring. Even when the bearing ball durability is improved, the durability of the bearing degrades due to wear of the outer ring and inner ring.

In JP-A 2003-65337 (Kokai) (Patent Literature 2), a bearing ball made of a silicon nitride sintered body having a high thermal conductivity is used. The heat dissipation is improved by increasing the thermal conductivity of the silicon nitride sintered body.

### [Prior Art Documents]

### [Patent Literature]

Patent Literature 1: JP-A 2001-328869 (Kokai)
Patent Literature 2: JP-A 2003-65337 (Kokai)

### [Summary of Invention]

### [Problem to be Solved by Invention]

The improvement of the heat dissipation of the bearing ball is effective for suppressing the thermal expansion of the outer ring and inner ring. However, no further effects have been obtained. By investigating the cause, it was found that the durability degraded because the tendency of the bearing ball to induce wear of the mating members (the outer ring and inner ring) was insufficiently reduced.

The invention is intended to address such problems, and to provide a silicon nitride sintered body that can improve the durability of the wear-resistant member.

### [Means for Solving Problem]

A silicon nitride sintered body according to an embodiment includes silicon nitride crystal grains and a grain boundary phase, and in a case where Raman spectroscopy of a 20 µm×20 µm region at any cross section of the silicon nitride sintered body is performed, peaks are detected at seven or more locations within the range of not less than 400 cm⁻¹ and not more than 1200 cm⁻¹, and the most intense peak within this range is not in the range of not less than 515 cm⁻¹ and not more than 525 cm⁻¹.

### [Brief Description of Drawings]

[FIG. 1]

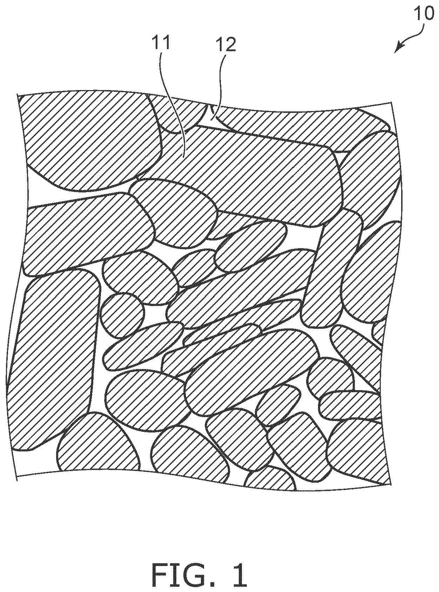

   FIG. 1 is a drawing showing a portion of a cross-sectional structure of a silicon nitride sintered body according to an embodiment.
[FIG. 2]

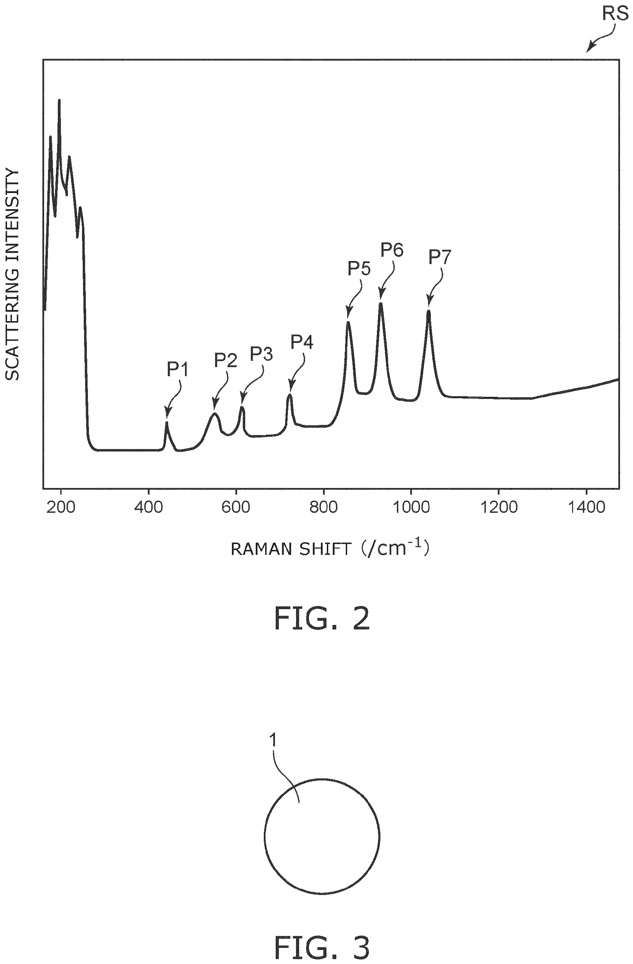

   FIG. 2 is a figure schematically illustrating analysis results of Raman spectroscopy of the silicon nitride sintered body according to the embodiment.
[FIG. 3]
   FIG. 3 is a drawing showing an example of a bearing ball according to the embodiment.
[FIG. 4]

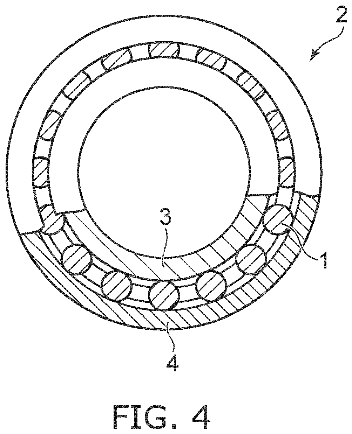

   FIG. 4 is a drawing showing an example of a bearing according to the embodiment.

### [Embodiments of Invention]

A silicon nitride sintered body according to an embodiment includes silicon nitride crystal grains and a grain boundary phase, and in a case where Raman spectroscopy of a 20 µm×20 µm region at any cross section of the silicon nitride sintered body is performed, seven or more peaks are detected within a range of not less than 400 cm⁻¹ and not more than 1200 cm⁻¹, and a most intense peak of the seven or more peaks is not in the range of not less than 515 cm⁻¹ and not more than 525 cm⁻¹.

FIG. 1 is a drawing showing a portion of a cross-sectional structure of a silicon nitride sintered body according to an embodiment.

In FIG. 1, 10 is a silicon nitride sintered body, 11 is a silicon nitride crystal grain, and 12 is a grain boundary phase. As shown in FIG. 1, the silicon nitride sintered body 10 according to the embodiment includes the silicon nitride crystal grains 11 and the grain boundary phase 12. The grain boundary phase is formed by a reaction within the sintering aid powder or a reaction between the sintering aid powder and an impurity of the silicon nitride powder. The grain boundary phase fills the gaps between the silicon nitride crystal grains. The strength of the sintered body can be increased thereby.

In a case where Raman spectroscopy of a unit area 20 µm×20 µm region at any cross section of the silicon nitride sintered body according to the embodiment is performed, seven or more peaks are detected within the range of not less than 400 cm⁻¹ and not more than 1200 cm⁻¹, and the most intense peak of the seven or more peaks is not in the range of not less than 515 cm⁻¹ and not more than 525 cm⁻¹.

Raman spectroscopy is a method of evaluating substances by using Raman scattered light. Raman scattered light is a phenomenon in which light having different wave numbers corresponding to the vibration energies for the excitation light is scattered. The wavelength difference corresponds to the amount of energy of the molecular vibration of the substance. Raman scattered light that has different wavelengths can be obtained for substances having different molecular structures. By examining the Raman scattered light, the vibrational modes of the atoms of the sample can be identified, and data related to the bonding state can be obtained. For example, even for the same composition, different Raman scattered light is obtained when the orientation, crystallinity, or the like is different. Therefore, the Raman spectrum of powdered silicon nitride and the Raman spectrum of a sintered body are different. Also, the appearance of a sintered body is not transparent.

The measurement region of the Raman spectroscopy was set to a unit area of 20 µm×20 µm. This size allows both the silicon nitride crystal grains and the grain boundary phase to be included in the measurement region. The inViaReflex Ray microscope (resolution: 0.3 cm⁻¹) made by Renishaw plc or a device having equivalent or better performance is used as the measurement device used in the Raman spectroscopy. A LD-pumped green laser (having a wavelength of 532 nm and an output of 100 mW) was used as the excitation laser. The irradiated laser beam diameter was set to 0.7 µm. The exposure time was set to 1 second per measurement point, and the stage movement step was set to 0.4 µm. Multivariate curve resolution (MCR) using image analysis software WiRe4 Empty Modelling was used for the data analysis. Here, the peaks in the obtained Raman spectra detected by the analysis software were used as the peaks. Also, the widths at half maximum and peak intensities were obtained by the analysis software. Here, the obtained peak intensities are values of the baseline value subtracted from the absolute intensities of the peaks. The baseline value also can be obtained by the analysis software. Also, the total number of measurement locations was 2601 locations. Spectra having an improved SN ratio (the ratio of the magnitude of the noise to the magnitude of the spectrum) was obtained by averaging the spectra at all of the measurement locations. Also, Raman spectra having little measurement location dependence were obtained by measuring while moving the stage. The air temperature when measuring was set to 25 degrees Celsius (25 °C).

For the silicon nitride sintered body according to the embodiment, seven or more peaks are detected within the range of the wave numbers of not less than 400 cm⁻¹ and not more than 1200 cm⁻¹.In the Raman spectroscopy, the most intense peak of the silicon nitride crystal grains is detected within the range of not less than 100 cm⁻¹ and 300 cm⁻¹.The peaks within the range of not less than 400 cm⁻¹ and not more than 1200 cm⁻¹ are different from the most intense peak of the silicon nitride crystal grains. Also, it is favorable for the position of the most intense peak in the range of not less than 400 cm⁻¹ and not more than 1200 cm⁻¹ not to be in the range of not less than 515 cm⁻¹ and not more than 525 cm⁻¹.The most intense peak is the peak having the largest intensity (intensity). That is, the most intense peak among the peaks within the range of not less than 400 cm⁻¹ and not more than 1200 cm⁻¹ exists in the range of not less than 400 cm⁻¹ and not more than 514 cm⁻¹, or not less than 526 cm⁻¹ and not more than 1200 cm⁻¹.As described above, the most intense peak of the silicon nitride crystal grains is detected within the range of not less than 100 cm⁻¹ and not more than 300 cm⁻¹.For the silicon nitride sintered body according to the embodiment, the largest peak among the peaks detected within the range of not less than 400 cm⁻¹ and not more than 1200 cm⁻¹ is not in the range of not less than 515 cm⁻¹ and not more than 525 cm⁻¹.

Peaks caused by free silicon, etc., are examples of peaks detected in the range of not less than 515 cm⁻¹ and not more than 525 cm⁻¹.Therefore, a large peak in the range of not less than 515 cm⁻¹ and not more than 525 cm⁻¹ suggests that the amount of free silicon is high. The intensity of the free silicon peak being the largest in the range of not less than 400 cm⁻¹ and not more than 1200 cm⁻¹ indicates that the existence ratio of free silicon is large. That is, when the intensity of the free silicon peak is the largest in the range of not less than 400 cm⁻¹ and not more than 1200 cm⁻¹, the amount of free silicon may be too high, and the strength of the silicon nitride sintered body may be reduced. Therefore, the position of the most intense peak in the range of not less than 400 cm⁻¹ and not more than 1200 cm⁻¹ is not in the range of not less than 515 cm⁻¹ and not more than 525 cm⁻¹.

As described above, Raman spectroscopy detects the peaks corresponding to the bonding states of the atoms. Even for the same composition, the peaks change according to the bonding state. The durability can be improved by the bonding states for which seven or more peaks are detected within the range of not less than 400 cm⁻¹ and not more than 1200 cm⁻¹. In particular, the contact of the bearing with the outer ring and inner ring can be stabilized. Although not particularly limited, it is favorable for the upper limit of the number of peaks detected within the range of not less than 400 cm⁻¹ and not more than 1200 cm⁻¹ to be not more than 10.

When a peak exists within the range of not less than 515 cm⁻¹ and not more than 525 cm⁻¹, the peak is not the most intense peak within the range of not less than 400 cm⁻¹ and not more than 1200 cm⁻¹.The smaller the peak of the wave number in the range of not less than 515 cm⁻¹ and not more than 525 cm⁻¹ due to free silicon, the better. It is more favorable for no peak to exist in the range of not less than 515 cm⁻¹ and not more than 525 cm⁻¹.

It is favorable for at least three peaks of the seven or more peaks detected within the range of not less than 400 cm⁻¹ and not more than 1200 cm⁻¹ to exist within the range of not less than 530 cm⁻¹ and not more than 830 cm⁻¹.More favorably, the at least three peaks of the seven or more peaks exist within the range of not less than 530 cm⁻¹ and not more than 800 cm⁻¹.

Also, it is favorable for at least one of the seven or more peaks to be within a first range of not less than 440 cm⁻¹ and not more than 460 cm⁻¹.The intensity of the most intense peak within the first range is taken as 1. When multiple peaks are detected, the peak having the largest intensity within the first range is used as the most intense peak. The most intense peak within the first range is a peak due to the silicon nitride crystal grains. Although not particularly limited, it is favorable for the number of peaks in the first range to be not less than 1 and not more than 3. When there are four or more peaks, it may be difficult to distinguish the true peak intensities of the peaks. More favorably, the number of peaks within the first range is 1 or 2.

Also, it is favorable for at least three of the seven or more peaks to exist within a second range of not less than 500 cm⁻¹ and not more than 830 cm⁻¹.Although not particularly limited, it is favorable for the upper limit of the number of detected peaks to be not more than 6. When the number of peaks is too high, it may be difficult to control the number of peaks within a third range of greater than 830 cm⁻¹ and not more than 1200 cm⁻¹. When the peak intensity of the most intense peak within the first range is taken as 1, it is favorable for the peak intensities of the three or more peaks existing within the second range to be not less than 0.8 and not more than 2.0.

For the silicon nitride sintered body according to the embodiment, the peaks that are detected in 400 cm⁻¹ to 1200 cm⁻¹ other than the ranges described above are not particularly limited. For example, peaks may exist in the range of not less than 410 cm⁻¹ and not more than 420 cm⁻¹, the range of not less than 715 cm⁻¹ and not more than 725 cm⁻¹, etc. Peaks due to iron, iron compounds, etc., are detected in these ranges. Iron compounds are iron oxide, etc. Peaks may exist in ranges other than 400 cm⁻¹ to 1200 cm⁻¹ such as the range of not less than 270 cm⁻¹ and not more than 280 cm⁻¹, the range of not less than 1320 cm⁻¹ and not more than 1340 cm⁻¹, the range of not less than 1570 cm⁻¹ and not more than 1630 cm⁻¹, etc. Peaks due to tungsten, tungsten compounds, etc., are detected in these ranges. Tungsten compounds are tungsten oxide, etc.

The peaks within the second range are peaks due to the silicon nitride crystal grains or the grain boundary phase. When the peak intensities within the second range are not less than 0.8 times and not more than 2.0 times the maximum peak intensity within the first range, balance is achieved with the silicon nitride crystal grains exhibiting the most intense peak within the first range. As a result, the orientations of the silicon nitride crystal grains are controlled, and the wear resistance is improved.

Also, it is favorable for at least three of the seven or more peaks to exist within the third range. Although not particularly limited, it is favorable for the upper limit of the number of peaks detected in the third range to be not more than 6. When the number of peaks is too high, it may be difficult to control the number of peaks within the second range. When the peak intensity of the most intense peak within the first range is taken as 1, it is favorable for the peak intensities of the three or more peaks existing within the third range to be not less than 2.7 and not more than 3.7.

The peaks that are within the third range are peaks due to the silicon nitride crystal grains or the grain boundary phase. When the peak intensities within the third range are not less than 2.7 times and not more than 3.7 times the maximum peak intensity within the first range, balance is achieved with the silicon nitride crystal grains exhibiting the most intense peak within the first range. As a result, the orientations of the silicon nitride crystal grains are controlled, and the wear resistance is improved.

It is favorable for at least one of the seven or more peaks to be within the range of not less than 500 cm⁻¹ and not more than 600 cm⁻¹ and to have a full width at half maximum of not less than 10 cm⁻¹ and not more than 100 cm⁻¹.It is more favorable for the full width at half maximum to be not less than 20 cm⁻¹ and not more than 80 cm⁻¹, and more favorable for the full width at half maximum to be not less than 40 cm⁻¹ and not more than 70 cm⁻¹.Hereinafter, the "full width at half maximum" is called simply the "width at half maximum".

It is more favorable for no peak within the range of not less than 500 cm⁻¹ and not more than 600 cm⁻¹ having a width at half maximum of not less than 10 cm⁻¹ and not more than 100 cm⁻¹ to be within the range of not less than 515 cm⁻¹ and not more than 525 cm⁻¹.It is more favorable for no peak having a width at half maximum of not less than 40 cm⁻¹ and not more than 70 cm⁻¹ to be within the range of not less than 515 cm⁻¹ and not more than 525 cm⁻¹.Also, it is favorable for one or more peaks within the range of not less than 530 cm⁻¹ and not more than 600 cm⁻¹ having a width at half maximum of not less than 40 cm⁻¹ and not more than 70 cm⁻¹ to be detected. More favorably, the number of peaks within the range of not less than 530 cm⁻¹ and not more than 600 cm⁻¹ having a width at half maximum of not less than 40 cm⁻¹ and not more than 70 cm⁻¹ is only one. When the widths at half maximum of the peaks within the range of not less than 530 cm⁻¹ and not more than 600 cm⁻¹ are not less than 40 cm⁻¹ and not more than 70 cm⁻¹, a width at half maximum of not more than 70 cm⁻¹ indicates that the crystallinity is good. Good crystallinity helps stabilize the suppression of the tendency to induce wear of the mating members. On the other hand, when the width at half maximum is less than 10 cm⁻¹, there is a risk that the crystallization may progress too much, and the impact resistance may be unfavorably affected.

The peaks that are within the range of not less than 400 cm⁻¹ and not more than 1200 cm⁻¹ are mainly peaks due to compounds of the silicon nitride crystal grains or the grain boundary phase. The type of the chemical bond can be determined from the position of the peak detected by Raman spectroscopy. Also, the width at half maximum of the peak indicates the crystallinity. The crystallinity increases as the width at half maximum of the peak decreases. Also, the peak intensity is affected by the orientation and/or concentration. The peak shift value is affected by the stress and/or strain amount. Even for materials of the same composition, the numbers, intensities, and widths at half maximum of the peaks change according to the bonding state, crystallinity, orientation, strain amount, etc.

In the silicon nitride sintered body, it is favorable for the average grain size of the silicon nitride crystal grains to be not more than 2 µm. It is favorable for the area ratio of the silicon nitride crystal grains having aspect ratios of not less than 2 to be within the range of not less than 20% and not more than 70%. The orientation, strain amount, etc., can be homogenized by controlling the size of the silicon nitride crystal grains.

A scanning electron microscope (SEM) photograph of any cross section is used to measure the average grain size of the silicon nitride crystal grains. The maximum diameters of the silicon nitride crystal grains visible in the SEM photograph are used as the major diameters. The length of a line segment extending perpendicular from the center of the major diameter is used as the minor diameter. Grain size = (major diameter + minor diameter)÷2. The average value of the grain sizes of fifty silicon nitride crystal grains is used as the average grain size. Also, for particles that overlap other silicon nitride crystal grains and have contours that cannot be confirmed, the grain sizes are calculated based on the portions that can be observed.

A SEM photograph of any cross section also is used to measure the aspect ratio. The technique for determining the major diameter and the minor diameter is the same as that of the grain size. Aspect ratio = major diameter/minor diameter is used. The area ratio of the silicon nitride crystal grains visible in a 20 µm×20 µm region of the SEM photograph and having aspect ratios of not less than 2 is determined. Also, similarly to the grain size, for particles that overlap other silicon nitride crystal grains and have contours that cannot be confirmed, the grain sizes are calculated based on the portions that can be observed.

The grain boundary phase may be removed by etching when the contours of the silicon nitride crystal grains cannot be clearly seen.

Also, it is favorable for titanium nitride (TiN) particles to exist in the grain boundary phase. Titanium nitride grains are compounds that reinforce the grain boundary phase. Also, the titanium nitride grains are compounds that easily generate Raman spectral peaks within the range of not less than 400 cm⁻¹ and not more than 1200 cm⁻¹.

FIG. 2 is a figure schematically illustrating analysis results of Raman spectroscopy of the silicon nitride sintered body according to the embodiment.

In the Raman spectrum RS shown in FIG. 2, the horizontal axis is the Raman shift (cm⁻¹), and the vertical axis is the scattering intensity. When the silicon nitride sintered body according to the embodiment is analyzed by Raman spectroscopy, for example, seven peaks P1 to P7 are detected within the range of not less than 400 cm⁻¹ and not more than 1200 cm⁻¹ as shown in FIG. 2. No peak is detected in the range of not less than 515 cm⁻¹ and not more than 525 cm⁻¹.The peak P1 is detected within the first range of not less than 440 cm⁻¹ and not more than 460 cm⁻¹.The three peaks P2 to P4 are detected within the second range of not less than 500 cm⁻¹ and not more than 830 cm⁻¹.The three peaks P5 to P7 are detected within the third range of greater than 830 cm⁻¹ and not more than 1200 cm⁻¹. The intensities of the peaks P2 to P4 within the second range each are not less than 0.8 times and not more than 2.0 times the intensity of the peak P1 within the first range. The intensities of the peaks P5 to P7 within the third range each are not less than 2.7 times and not more than 3.7 times the intensity of the peak P1. Also, the peak P2 is within the range of not less than 530 cm⁻¹ and not more than 600 cm⁻¹; and the width at half maximum of this peak is not less than 40 cm⁻¹ and not more than 70 cm⁻¹.

It is favorable for the flexural strength of a three-point bending test of the silicon nitride sintered body to be not less than 700 MPa. The wear resistance can be improved when the strength is high. It is therefore favorable for the flexural strength to be not less than 700 MPa, or even not less than 900 MPa. The three-point bending test is performed in accordance with JIS-R-1601 (2008). The flexural strength of the three-point bending test also is called the three-point bending strength. JIS-R-1601 (2008) corresponds to the ISO 14704 (2000).

According to a silicon nitride sintered body having Raman spectral peaks such as those described above, the wear resistance can be improved. Therefore, the durability can be improved by including the silicon nitride sintered body according to the embodiment in a wear-resistant member. In particular, according to the embodiment, the tendency to induce wear of the mating members can be suppressed; therefore, the durability of the mating members also can be improved. A bearing member, roll member, compressor member, pump member, engine member, friction stir welding apparatus member, etc., are examples of such a wear-resistant member.

A bearing is a combination of bearing members made of rolling bodies and a bearing ring. The rolling bodies are spherical or roller-shaped members. The rolling body member is called a bearing ball. The spherical shape is a ball; and the roller shape is a circular column. Also, a member that uses spherical rolling bodies is called a ball bearing. A member that uses roller-shaped rolling bodies is called a roller bearing. Needle bearings, tapered roller bearings, and spherical roller bearings also are included in roller bearings. Also, the bearing ring includes an outer ring and an inner ring. Rolling rollers, feed part rollers of electronic devices, etc., are examples of roll members. Vanes and the like are examples of compressor members or pump members. Here, a compressor is differentiated as being a device that increases the pressure; and a pump is differentiated as being a device that reduces the pressure. Cam rollers, cylinders, pistons, check balls, etc., are examples of engine members. A friction stir welding apparatus tool member or the like is an example of a friction stir welding apparatus member.

FIG. 3 is a drawing showing an example of the wear-resistant member (a bearing ball) according to the embodiment. FIG. 4 is a drawing showing another example of the wear-resistant member (a bearing) according to the embodiment.

In FIGS. 3 and 4, 1 is a bearing ball, 2 is a bearing, 3 is an inner ring, and 4 is an outer ring. The bearing 2 has a structure in which the bearing ball 1 is disposed between the inner ring 3 and the outer ring 4. Four or more bearing balls 1 are disposed in the bearing 2. The inner ring 3 and the outer ring 4 are mating members of the bearing ball 1.

The bearing ball 1 is made of the silicon nitride sintered body according to the embodiment. Polishing may be performed so that the surface roughness Ra is not more than 0.1 µm as necessary. The surface roughness Ra of bearing balls corresponding to the grade is defined in American Society for Testing and Materials ASTMF 2094. Therefore, the polishing may be performed to provide the surface roughness corresponding to the grade. ASTM is a standard issued by ASTM International. The former name of ASTM International is the American Society for Testing and Materials (American Society for Testing and Materials: ASTM). Also, even when applied to a wear-resistant member other than a bearing ball, surface polishing may be performed as necessary. In other words, it is favorable for the wear-resistant member according to the embodiment to include a polished surface having a surface roughness Ra of not more than 0.1 µm, or even an Ra of not more than 0.02 µm.

When the silicon nitride sintered body according to the embodiment is applied to the bearing ball 1, the durability as the bearing 2 can be improved because the tendency to induce wear of the outer ring 4 and the inner ring 3 is reduced. Multiple bearing balls 1 are used in the bearing 2. The durability as the bearing 2 can be improved by the reduction of the tendency of the individual bearing balls 1 to induce wear of the outer ring 4 and the inner ring 3.

Also, according to the bearing ball 1 according to the embodiment, the rolling life can be not less than 600 hours when the rolling life is measured using a thrust-type bearing tester under the conditions of a maximum contact pressure of 5.9 MPa and a rotational speed of 1200 rpm. The bearing 2 also has the effects of suppressing the temperature rise when rotating and suppressing the increase of the sliding noise. In recent years, inverter-driven motors are starting to become prevalent. Inverter driving is a method in which the rotational speed of the motor is variable. Generally, the rotational speed of a motor is within the range of 0 to 15000 rpm. 0 rpm is the state in which the motor is stopped. The bearings rotate according to the rotational speed of the motor. By reducing the tendency to induce wear, the durability is good even when the rotational speed is changed. Thus, the silicon nitride sintered body according to the embodiment is favorable for wear-resistant members that include mating members.

Also, the bearing ball 1 according to the embodiment can reduce the tendency to induce wear of the mating members and therefore can suppress the occurrence of electrolytic corrosion. Electrolytic corrosion is a phenomenon in which a partial discharge phenomenon occurs between the bearing ball and the inner ring and between the bearing ball and the outer ring so that the surfaces of the inner ring and outer ring are eroded. The bearing includes the silicon nitride sintered body as the bearing ball and a metal such as bearing steel SUJ2 or the like as the inner ring and outer ring. When electrolytic corrosion occurs, the inner ring and the outer ring that are made of metal are eroded. As the erosion progresses, the function of the bearing degrades. When the function degrades, an increase of the sliding noise or the like occurs.

Generally, in a bearing, grease is filled between the bearing ball and the inner ring and between the bearing ball and the outer ring. Grease is lubricating and insulative. There are various greases such as lithium soap grease, etc. The grease is degraded when the partial discharge phenomenon occurs between the bearing ball and the inner ring and between the bearing ball and the outer ring. When degradation of the grease occurs, the lubrication and insulation degrade. Accordingly, electrolytic corrosion easily occurs. When the grease degrades, discoloration of the grease occurs. For example, lithium soap grease changes from transparent to black. For the bearing ball according to the embodiment, the degradation of the grease can be suppressed because the tendency to induce wear of the mating members is reduced. From this perspective as well, the bearing can provide a longer life.

Causes of the degradation of the grease include physical factors, chemical factors, the introduction of foreign matter, etc. Physical factors are mainly changes over time. This is degradation that occurs due to continued use. Mechanical shear, centrifugal force, etc., are examples of other physical factors. Chemical factors are mainly electrolytic corrosion. Oxidization due to heat and the like are examples of other chemical factors. Contact of the bearing ball with the inner ring or the outer ring is the major cause of introduction of foreign matter. Wear debris is generated by the bearing ball contacting the inner ring or the outer ring.

These effects cause lubrication defects, insulation degradation, etc., due to hardening of the grease.

The bearing ball according to the embodiment can suppress the tendency to induce wear of the mating members, and so the occurrence of electrolytic corrosion or wear debris can be suppressed. As a result, the degradation of the grease can be suppressed, and the bearing can have an even longer life.

A method for producing the silicon nitride sintered body according to the embodiment will now be described. As long as the silicon nitride sintered body according to the embodiment has the configuration described above, the method for producing the silicon nitride sintered body is not particularly limited. The following example is an example of a method for obtaining the silicon nitride sintered body with a high yield.

First, a silicon nitride powder is prepared. It is favorable for the silicon nitride powder to have an alpha percentage of not less than 80 mass%, an average grain size D₅₀ of not less than 0.4 µm and not more than 2.5 µm, and an impurity oxygen content of not more than 2 mass%. It is favorable for the impurity oxygen content to be not more than 2 mass%, or even not more than 1.0 mass%. More favorably, the impurity oxygen content is not less than 0.1 mass% and not more than 0.8 mass%. When the impurity oxygen content is high, i.e., greater than 2 mass%, a reaction may occur between the impurity oxygen and the sintering aid, and an excessive grain boundary phase may be formed.

Then, a sintering aid powder is prepared. It is favorable for the added amount of the sintering aid to be within the range of not less than 3 mass% and not more than 20 mass%. The added amount of the sintering aid is calculated using the total of the silicon nitride powder and the sintering aid powder as 100 mass%. It is favorable for the sintering aid powder to have an average grain size D₅₀ of not more than 1.0 µm, or even not more than 0.4 µm.

It is favorable for the sintering aid powder to be at least one selected from a rare-earth compound, an aluminum compound, and a titanium compound. It is favorable for the rare-earth compound to be one or two selected from an oxide of yttrium or an oxide of a lanthanoid element. It is favorable for the aluminum compound to be at least one selected from aluminum oxide, aluminum nitride, or aluminum oxynitride. It is favorable for the titanium compound to be at least one selected from titanium oxide, titanium nitride, or titanium oxynitride. Also, it is favorable for the rare-earth compound content to be not less than 2 mass% and not more than 10 mass%. It is favorable for the aluminum compound content to be not less than 2 mass% and not more than 10 mass%. It is favorable for the titanium compound content to be not less than 0.1 mass% and not more than 5 mass%. In addition, an alkaline earth compound or the like may be added. The total amount of the sintering aid is adjusted to be within the range of not less than 3 mass% and not more than 20 mass%. Also, an iron compound or a tungsten compound may be used instead of a titanium compound.

Then, a mixing process of a raw material powder in which the silicon nitride powder and the sintering aid powder are mixed is performed. The mixing process of the raw material powder is performed using a bead mill or a ball mill. Also, the mixing process is performed using a raw material powder slurry in which a binder and/or solvent are mixed.

First, the ball mill will be described. The ball mill is a pulverizer that uses media having a diameter of 4 to 50 mm. In the ball mill, the raw material powder slurry and the media are placed in a pulverizing chamber (a mixing chamber) called a vessel and are pulverized while rotating. The raw material powder slurry and the media impact each other as the vessel rotates, and the raw material powder slurry is pulverized. It is favorable to perform the mixing process using the ball mill for not less than 20 hours. The ball mill may be a pot-roller type. Other than the pot-roller type, a device that rotates the pulverizing chamber with the two end portions of the pulverizing chamber fixed may be used as the ball mill. The pot-roller type is a device in which the vessel is placed on substantially circular columnar rollers having a controlled rotational speed, and the vessel is rotated by the rotation of the rollers. Also, the pulverizing conditions can be controlled by controlling the rotational speed (rpm) of the vessel. Therefore, for a ball mill, "the rotational speed of the stirring process" is defined as the rotational speed of the pulverizing chamber (the vessel).

The bead mill will now be described. The bead mill is a pulverizer that uses media having a diameter of not more than 3 mm. The impact energy of the raw material powder slurry and the media is larger in the bead mill than in the ball mill. It is favorable to perform the mixing process using the bead mill for not less than 3 hours. In the bead mill, the pulverizing is performed by rotating a propeller-shaped stirring bar called a disk. The media exists at the disk part periphery. The pulverizing, stirring, or the like is performed as the disk rotates.

When performing each of the mixing processes, although not particularly limited, it is favorable for the upper limit of the time to be not more than 100 hours. Exceeding 100 hours will not improve the effectiveness, and may cause a cost increase.

The raw material powder slurry can be uniformly mixed in the mixing process using the bead mill or the ball mill. Pulverizing or crushing of the raw material powder occurs, resulting in a uniform mixed state. Subsequently, the state of the uniform mixture can be maintained by performing a stirring process. When the uniformly mixed raw material powder slurry is left as-is, the raw material powder settles with respect to the binder or the solvent. Agglomeration of the raw material powder occurs when the settling phenomenon occurs. The stirring process has the effect of preventing settling. The state in which the raw material powder is uniformly mixed can be maintained by setting the rotational speed of the stirring process in a ball mill to be not less than 50 rpm and 150 rpm for not less than 12 hours.

The viscosity of the raw material powder slurry can be prepared by performing such a ball mill stirring process. When the rotational speed is less than 50 rpm, the stirring force may be insufficient. Also, when the rotational speed is large, i.e., greater than 150 rpm, the state may change from the uniform mixed state adjusted in the mixing process. Also, the viscosity of the raw material powder slurry can be controlled by stirring for not less than 12 hours. The uniform mixed state of the raw material powder can be maintained thereby.

The agitator that is used in the stirring process of the bead mill is a device that stirs the interior of a tank by rotating a propeller-shaped stirring bar at a constant speed in one direction. Also, a device in which the media is not mixed is favorable. The media not being mixed means that the bead mill device includes a mechanism that separates the media and the slurry; and the media amount in the slurry after the stirring process is controlled to be low. It is favorable for the rotational speed of the stirring bar of the bead mill to be not less than 500 rpm and not more than 2000 rpm. More favorably, the rotational speed of the stirring bar is not less than 500 rpm and not more than 1500 rpm. The load on the motor rotating the stirring bar may be too high when the rotational speed is greater than 2000 rpm. The stirring process may take too much time when the rotational speed is less than 500 rpm.

Then, a forming process is performed to form a formed body using the raw material powder (including the raw material powder slurry). Die pressing, cold isostatic pressing (CIP), sheet forming, etc., are applicable as the forming technique. Sheet forming is a doctor blade method, roll forming, etc. Also, these forming techniques may be combined. A solvent such as toluene, ethanol, butanol, etc., may be mixed into the raw material powder (including the raw material powder slurry) as necessary. Also, the raw material powder (including the raw material powder slurry) is mixed with an organic binder as necessary. Butyl methacrylate, polyvinyl butyral, polymethyl methacrylate, etc., are examples of the organic binder. Also, it is favorable for the added amount of the organic binder to be not less than 3 parts by mass and not more than 17 parts by mass when the raw material mixture (the total amount of the silicon nitride powder and the sintering aid powder) is taken as 100 parts by mass. When the added amount of the organic binder is less than 3 parts by mass, the binder amount is too low, and it is difficult to maintain the shape of the formed body. Also, when high, i.e., greater than 17 parts by mass, the pores in the formed body after the degreasing process (the formed body after the degreasing treatment) become large; and a dense sintered body is not obtained.

Then, a degreasing process of the formed body is performed. In the degreasing process, the formed body is heated in a nonoxidizing atmosphere at a temperature of not less than 500 °C and not more than 800 °C for not less than 1 hour and not more than 4 hours to degrease the greater part of the organic binder added beforehand. A nitrogen gas atmosphere, argon gas atmosphere, etc., are examples of the nonoxidizing atmosphere. If necessary, the organic substance amount that remains in the degreased body is controlled by processing in an oxidation atmosphere such as an ambient-air atmosphere, etc.

Then, the degreased body (the formed body after the degreasing treatment) is placed inside a firing container; and a sintering process is performed in a nonoxidizing atmosphere inside a furnace. It is favorable for the temperature of the sintering process to be within the range of not less than 1650 °C and not more than 1950 °C. It is favorable for the nonoxidizing atmosphere to be a nitrogen gas atmosphere or a reducing atmosphere including nitrogen gas. Also, it is favorable for the pressure inside the furnace to be a pressurized atmosphere.

When the degreased body is fired using a sintering temperature in a low-temperature state of less than 1650 °C, the grain growth of the silicon nitride crystal grains is insufficient, and a dense sintered body is difficult to obtain. On the other hand, when firing at a sintering temperature that is greater than 1950 °C, silicon nitride may decompose into Si and N₂ if the furnace atmosphere pressure is low. It is therefore favorable to control the sintering temperature to be in the ranges described above. Also, it is favorable for the sintering time to be within the range of not less than 3 hours and not more than 12 hours. At this time, it is favorable for the furnace atmosphere pressure to be not less than atmospheric pressure and not more than 60 MPa. More favorably, the furnace atmosphere pressure is not less than 0.2 MPa and not more than 30 MPa.

It is favorable to perform hot isostatic press (HIP) processing of the sintered body after the sintering process described above. The process of sintering the degreased body described above is called a first sintering process; and the process of performing HIP processing of the sintered body is called a second sintering process.

In the HIP processing, it is favorable for the temperature to be within the range of not less than 1600 °C and not more than 1900 °C, and for the pressure to be within the range of not less than 80 MPa and not more than 200 MPa. The pores (the pores) inside the sintered body can be reduced by the HIP processing. A dense sintered body can be obtained thereby. When the pressure is less than 80 MPa, the effect of applying pressure is insufficient. Also, when high, i.e., greater than 200 MPa, the burden on the manufacturing apparatus may become high.

Polishing of the obtained silicon nitride sintered body is performed as necessary. Also, when multi-part manufacturing is performed, cutting and the like of the silicon nitride sintered body may be performed.

### (Examples)

### (Examples 1 to 4 and comparative examples 1 to 2)

The combinations shown in Table 1 were prepared as raw material powders. In the silicon nitride powders used in the examples and the comparative examples, the alpha percentage was not less than 80 mass%, the average grain size D₅₀ was 0.4 to 2.5 µm, and the impurity oxygen content was not more than 2 mass%. The average grain size D₅₀ of the sintering aid powder used in the examples 1 to 4 and the comparative example 1 was not more than 1.0 µm. The average grain size D₅₀ of the sintering aid powder used in the comparative example 2 was 1.4 µm.

**[Table 1]**

| | Raw material mixed powder (mass%) |
|---|---|
| Example 1 | Si₃N₄(86.5),Y₂O₃(6), |
| | Al₂O₃(4),AlN(3), |
| | TiO₂(0.5) |
| Example 2 | Si₃N₄(87.8),Y₂O₃(4), |
| | Al₂O₃(3),AlN(4), |
| | TiO₂(1.2) |
| Example 3 | Si₃N₄(87.2),Y₂O₃(5), |
| | Al₂O₃(5),AlN(2), |
| | TiO₂(0.8) |
| Example 4 | Si₃N₄(91),Y₂O₃(6), |
| | Al₂O₃(1.6),WO₃(1.4) |
| Comparative example 1 | Si3N4(86. 5),Y 203(6), |
| | Al₂O₃(4),AlN(3), |
| | TiO₂(0.5) |
| Comparative example 2 | Si₃N₄(94),Y₂O₃(3), |
| | Al₂O₃(3) |

Then, a mixing process and a stirring process of the raw material powder were performed. In the mixing process of the raw material powder, the raw material powder slurry was prepared by adding a binder and a solvent to the raw material powder. Stirring processing was not performed for the comparative examples 1 to 2. The conditions of the processes were as shown in Table 2.

**[Table 2]**

| | Mixing process of raw material powder | Stirring process of raw material powder | |
|---|---|---|---|
| | | Rotational speed | Time |
| Example 1 | Bead mill | 90 | 12 |
| | 20 hours | | |
| Example 2 | Ball mill | 100 | 20 |
| | 40 hours | | |
| Example 3 | Ball mill | 120 | 30 |
| | 50 hours | | |
| Example 4 | Bead mill | 150 | 15 |
| | 10 hours | | |
| Comparative example 1 | Bead mill | - | - |
| | 20 hours | | |
| Comparative example 2 | Ball mill | - | - |
| | 50 hours | | |

A forming process was performed using the obtained raw material powder slurry. The forming process was performed using die molding. Two types of formed bodies were made, including a formed body for obtaining a bearing ball having a size of 3/8 inch (a diameter of 9.525 mm), and a formed body for measuring the flexural strength.

Then, a degreasing process of the formed body was performed within the range of not less than 500 °C and not more than 800 °C for not less than 1 hour and not more than 4 hours. Then, a first sintering process of the degreased body was performed. In the first sintering process, sintering was performed for not less than 4 hours and not more than 8 hours under the conditions of a temperature of not less than 1750 °C and not more than 1870 °C and a pressure of not less than 0.1 MPa and not more than 0.5 MPa. HIP processing of the obtained sintered body was performed for not less than 3 hours and not more than 5 hours under the conditions of a temperature of not less than 1600 °C and not more than 1700 °C and a pressure of not less than 100 MPa and not more than 200 MPa. Polishing of the sintered body after the HIP processing was performed so that the surface roughness Ra was not more than 0.02 µm.

Raman spectroscopy was performed for the examples and the comparative examples. Any cross section of the silicon nitride sintered body was used in the Raman spectroscopy. An inViaReflex Ray microscope (resolution: 0.3 cm⁻¹) made by Renishaw plc was used in the Raman spectroscopy. A LD-pumped green laser (having a wavelength of 532 nm and an output of 100 mW) was used as the excitation laser; the irradiated laser beam diameter was set to 0.7 µm; the exposure time was set to 1 second per measurement point; and the stage movement step was set to 0.4 µm. Multivariate curve resolution (MCR) by image analysis software WiRe4 Empty Modelling was used in the data analysis. The total number of measurement locations was 2601 locations. Also, locations distant to the sintered body surface were measured. Spectra having an improved SN ratio (the ratio of the magnitude of the noise to the magnitude of the spectrum) was obtained by averaging the spectra at all of the measurement locations. Also, Raman spectra having little measurement location dependence were obtained by measuring while moving the stage.

The results are shown in Table 3. The wave numbers (cm⁻¹) shown in Table 3 are values in which the digits below the decimal point were rounded to the nearest whole number.

**[Table 3]**

| | Raman spectroscopy | | | |
|---|---|---|---|---|
| | Existence of seven or more peaks in 400 to 1200 cm⁻¹ | When most intense peak in 440 to 460 cm⁻¹ is taken as 1 | | Width at half maximum of most intense peak in 500 to 600 cm⁻¹ within range of 40 to 70 cm⁻¹? |
| | | Each peak intensity in 500 to 830 cm⁻¹ within range of 0.8 to 2.0? | Each peak intensity in 830 to 1200 cm⁻¹ within range of 2.7 to 3.77 | |
| Example 1 | Yes | Within range | Within range | Within range |
| Example 2 | Yes | Within range | Within range | Within range |
| Example 3 | Yes | Within range | Within range | Within range |
| Example 4 | Yes | Intensity ratio difference | Outside range | Outside range |
| Comparative example 1 | No | Outside range | Within range | Outside range |
| Comparative example 2 | No | Outside range | Outside range | No |

It can be seen from Table 3 that desirable Raman peaks were detected for the silicon nitride sintered bodies according to the examples. In each of these examples, the position of the most intense peak in the range of not less than 400 cm⁻¹ and not more than 1200 cm⁻¹ was not in the range of not less than 515 cm⁻¹ and not more than 525 cm⁻¹.Also, no peak was detected in the range of not less than 515 cm⁻¹ and not more than 525 cm⁻¹.

Also, for the silicon nitride sintered bodies according to the examples 1 to 3, three or more peaks among the peaks detected in the range of not less than 500 cm⁻¹ and not more than 830 cm⁻¹ were detected in the range of not less than 530 cm⁻¹ and not less than 800 cm⁻¹.Also, the intensities of the three or more peaks were not less than 0.8 and not more than 2.0 when the maximum peak intensity of not less than 440 cm⁻¹ and not more than 460 cm⁻¹ was taken as 1.

For the example 4, three or more peaks were detected in the range of not less than 530 cm⁻¹ and not more than 830 cm⁻¹. However, the number of peaks in the range of not less than 530 cm⁻¹ and not more than 830 cm⁻¹ was less than three for the peak intensity ratio when the maximum peak intensity in the range of not less than 440 cm⁻¹ and not more than 460 cm⁻¹ was taken as 1. Therefore, the example 4 was indicated as "intensity ratio difference" in Table 3.

For the comparative example 1 and the comparative example 2, only six peaks were detected in the range of not less than 400 cm⁻¹ and not more than 1200 cm⁻¹.In particular, only two peaks were detected in the range of not less than 500 cm⁻¹ and not more than 830 cm⁻¹.

The most intense peak of the peaks within the range of not less than 500 cm⁻¹ and not more than 600 cm⁻¹ was observed in the range of not less than 530 cm⁻¹ and not more than 600 cm⁻¹ for each of the examples 1 to 4 and the comparative example 1. For the examples 1 to 3, the width at half maximum of the most intense peak was not less than 40 cm⁻¹ and not more than 70 cm⁻¹. On the other hand, for the example 4 and the comparative example 1, the width at half maximum of the most intense peak was outside the range of not less than 40 cm⁻¹ and not more than 70 cm⁻¹.Also, for the comparative example 2, no peak was detected within the range of not less than 500 cm⁻¹ and not more than 600 cm⁻¹.

Then, the average grain size of the silicon nitride crystal grains and the area ratio of the silicon nitride crystal grains having aspect ratios of not less than 2 were measured. First, a SEM photograph of any cross section was imaged. The maximum diameters of the silicon nitride crystal grains visible in the SEM photograph were used as the major diameters. The lengths of the line segments extending perpendicular from the centers of the major diameters were used as the minor diameters. Grain size = (major diameter + minor diameter)÷2 was used, and the average value of fifty grain sizes was used as the average grain size. Aspect ratio = major diameter/minor diameter was used. The area ratio of the silicon nitride crystal grains in a 20 µm×20 µm region having aspect ratios of not less than 2 was calculated. Also, the three-point bending strength was checked. For the three-point bending strength, the flexural strength of a three-point bending test in accordance with JIS-R-1601 (2008) was measured. Also, the Vickers hardness was measured in accordance with JIS-R-1610 (2003) using a test load of 9.807 N (HV1). JIS-R-1610 (2003) corresponds to ISO 14705:2000.

The results are shown in Table 4.

**[Table 4]**

| | Average grain size (*µ* m) | Area ratio (%) | Three-point bending strength (MPa) | Vickers hardness HV1 |
|---|---|---|---|---|
| Example 1 | 1.8 | 43 | 980 | 1490 |
| Example 2 | 1.6 | 53 | 1020 | 1540 |
| Example 3 | 1.5 | 65 | 1040 | 1580 |
| Example 4 | 1.9 | 58 | 985 | 1500 |
| Comparative example 1 | 2.4 | 68 | 975 | 1470 |
| Comparative example 2 | 4.1 | 83 | 860 | 1470 |

For the examples, the average grain size of the silicon nitride crystal grains was not more than 2 µm. Also, the area ratio of the silicon nitride crystal grains having aspect ratios of not less than 2 was within the range of not less than 20% and not more than 70%. Also, the three-point bending strength was not less than 600 MPa for each of the examples and the comparative examples. Also, for the examples, the Vickers hardness HV1 was not less than 1490.

Then, durability tests using the bearing balls according to the examples and the comparative examples were performed. In the durability test, the rolling life was measured using a thrust-type rolling contact fatigue tester under the conditions of a surface pressure maximum contact pressure of 5.9 MPa and a rotational speed of 1200 rpm. Plates made of bearing steel SUJ2 were used as the mating members. The time until material removal of the surface of the bearing ball was measured. The upper limit of the measurement time was set to 600 hours. Test results in which surface material removal was not confirmed even after 600 hours elapsed are indicated by "not less than 600 hours". The results are shown in Table 5.

**[Table 5]**

| | Durability test |
|---|---|
| Example 1 | Not less than |
| | 600 hours |
| Example 2 | Not less than |
| | 600 hours |
| Example 3 | Not less than |
| | 600 hours |
| Example 4 | Not less than |
| | 600 hours |
| Comparative example 1 | Not less than |
| | 600 hours |
| Comparative example 2 | Not less than |
| | 450 hours |

It can be seen from the table that the bearing balls according to the examples 1 to 4 and the comparative example 1 had excellent durability. On the other hand, compared to the examples 1 to 4 and the comparative example 1, the durability degraded for the bearing ball according to the comparative example 2. It was considered that compared to the comparative example 2, the ratio of the silicon nitride crystal grains having aspect ratios of not less than 2 was reduced in the examples 1 to 4 and the comparative example 1.

Then, bearings that used the bearing balls according to the examples and the comparative examples were made. The inner ring and outer ring could have any configuration, but were made of bearing steel SUJ2 in the test. Also, although various greases could be used, lithium soap grease which was widely used as a general-purpose material was used in the test. In particular, a lithium soap grease that had a transparent original color was used. When a grease that has a transparent original color is used, the degradation of the grease can be observed as a color change. Also, each bearing was assembled using sixteen bearing balls. The change rate of the sliding noise of the bearing and the existence or absence of discoloration of the grease were measured.

A rotary shaft was mounted to the bearing; and the rotary shaft was rotated at 1200 rpm. To measure the change rate of the sliding noise, the sliding noise was measured after 10 continuous hours and after 400 continuous hours. The change rate of the sliding noise from after 10 continuous hours until after 400 continuous hours for the comparative example 1 was taken as 1. The changes of the sliding noise of the bearings according to the examples 1 to 4 and the comparative example 2 were compared to this change rate. The change rate had a value less than 1 when the change of the sliding noise was small.

Also, the change of the grease color was checked by dismantling the bearing after 400 hours. Discoloration of the grease indicates that the grease degraded. The discoloration of the grease was checked using the brightness. The grease color was brighter for a larger brightness numerical value, and the grease color was darker for a smaller brightness numeral.

The results are shown in Table 6. In Table 6, a brightness of not less than 9 and not more than 9.5 is defined as "light gray". A brightness of not less than 4 but less than 9 is defined as "dark gray". A brightness of less than 4 is defined as "black". The Munsell color system was used as the reference of these brightnesses. The Munsell color system corresponds to JIS Z 8721 (1993). The value of the brightness decreased as the degradation of the grease progressed.

**[Table 6]**

| | Sliding noise change rate | Grease color |
|---|---|---|
| Example 1 | 0.8 | Light gray |
| Example 2 | 0.7 | Light gray |
| Example 3 | 0.7 | Light gray |
| Example 4 | 0.9 | Light gray |
| Comparative example 1 | 1 | Dark gray |
| Comparative example 2 | 1.2 | Black |

It can be seen from Table 6 that the change rate of the sliding noise and the discoloration of the grease were improved for the examples. Although a large difference was not confirmed in the thrust test, differences were confirmed in the tests of the change of the sliding noise and the discoloration of the grease. This was because the tendency of the bearing to induce wear of the mating members was reduced.

While certain embodiments of the inventions have been illustrated, these embodiments have been presented by way of example only, and are not intended to limit the scope of the inventions. These novel embodiments may be embodied in a variety of other forms; and various omissions, substitutions, modifications, etc., can be made without departing from the spirit of the inventions. These embodiments and their modifications are within the scope and spirit of the inventions and are within the scope of the inventions described in the claims and their equivalents. Also, the embodiments described above can be implemented in combination with each other.

### [Reference Numeral List]

1 bearing ball
2 bearing
3 inner ring
4 outer ring
10 silicon nitride sintered body
11 silicon nitride crystal grain
12 grain boundary
RS Raman spectrum
P1 to P6 peak

## Claims

1. A silicon nitride sintered body (10) comprising silicon nitride crystal grains (11) and a grain boundary phase (12),
in a case where Raman spectroscopy of a 20 µm×20 µm region at any cross section of the silicon nitride sintered body (10) is performed, seven (P1 to P7) or more peaks being detected within a range of not less than 400 cm⁻¹ and not more than 1200 cm⁻¹, and a most intense peak of the seven or more peaks not being in a range of not less than 515 cm⁻¹ and not more than 525 cm⁻¹.

2. The silicon nitride sintered body (10) according to claim 1, wherein
at least three of the seven or more peaks are within a range of not less than 530 cm⁻¹ and not more than 830 cm⁻¹.

3. The silicon nitride sintered body (10) according to any one of claims 1 to 2, wherein
at least one (P1) of the seven or more peaks is within a range of not less than 440 cm⁻¹ and not more than 460 cm⁻¹.

4. The silicon nitride sintered body (10) according to any one of claims 1 to 3, wherein
among the seven or more peaks, intensities of at least three peaks (P2 to P4) within a range of not less than 500 cm⁻¹ and not more than 830 cm⁻¹ each are not less than 0.8 times and not more than 2.0 times an intensity of a most intense peak (P1) within a range of not less than 440 cm⁻¹ and not more than 460 cm⁻¹.

5. The silicon nitride sintered body (10) according to any one of claims 1 to 4, wherein
among the seven or more peaks, intensities of at least three peaks (P5 to P7) within a range of greater than 830 cm⁻¹ and not more than 1200 cm⁻¹ each are not less than 2.7 times and not more than 3.7 times an intensity of a most intense peak within a range of not less than 440 cm⁻¹ and not more than 460 cm⁻¹.

6. The silicon nitride sintered body (10) according to any one of claims 1 to 5, wherein
at least one of the seven or more peaks is within a range of not less than 500 cm⁻¹ and not more than 600 cm⁻¹ and has a full width at half maximum of not less than 10 cm⁻¹ and not more than 100 cm⁻¹.

7. The silicon nitride sintered body (10) according to any one of claims 1 to 6, wherein
a flexural strength in a three-point bending test of the silicon nitride sintered body is not less than 700 MPa.

8. A wear-resistant member comprising the silicon nitride sintered body (10) according to any one of claims 1 to 7.

9. The wear-resistant member according to claim 8, wherein
the wear-resistant member is a bearing ball (1).

10. The wear-resistant member according to claim 9, wherein
the bearing ball (1) has a rolling life of not less than 600 hours when the rolling life is measured using a thrust-type bearing tester under conditions of a maximum contact pressure of 5.9 MPa and a rotational speed of 1200 rpm.

11. A method for producing the silicon nitride sintered body (10) according to any one of claims 1 to 7, the method comprising:
mixing a raw material powder, in which a silicon nitride powder and a sintering aid powder are mixed, by using a ball mill and by rotating a mixing chamber at a rotational speed of not less than 50 rpm and not more than 150 rpm for not less than 12 hours.

12. A method for producing the silicon nitride sintered body (10) according to any one of claims 1 to 7, the method comprising:
mixing a raw material powder, in which a silicon nitride powder and a sintering aid powder are mixed, by using a bead mill and by rotating a stirring bar at a rotational speed of not less than 500 rpm and not more than 2000 rpm for not less than 3 hours.
